# EUROPÄISCHE PATENTSCHRIFT

(11) **EP 0 933 575 B1**
(45) Veröffentlichungstag und Bekanntmachung des Hinweises auf die Patenterteilung: **25.09.2002**
(21) Anmeldenummer: 98124324.9
(22) Anmeldetag: 21.12.1998
(51) Int. Cl.: F16L 3/12, F16L 3/10

(54) **Halteelement aus Kunststoff**
Plastic supporting element
Elément de maintien en plastique

(30) Priorität: 28.01.1998 DE 29801371 U
(43) Veröffentlichungstag der Anmeldung: 04.08.1999
(73) Patentinhaber: TRW CARR FRANCE, 67340 Ingwiller (FR)
(72) Erfinder: Klein, Jean-Luc, 67350 Ringendorf (FR); Meyer, Francis, 67500 Niederschaeffolsheim (FR)
(74) Vertreter: Schieschke, Klaus, Dipl.-Ing.

(56) Entgegenhaltungen:
- FR-A- 2 253 935
- FR-A- 2 572 488
- GB-A- 2 183 287
- US-A- 4 564 163

## Beschreibung

Die Erfindung bezieht sich auf ein Halteelement aus Kunststoff, insbesondere zur Befestigung mindestens eines rohrförmigen Gegenstands an einem Träger, mit einem Lagerbereich für den rohrförmigen Gegenstand und einem Haltebereich zur Anbringung an einem Träger, wobei der Lagerbereich über mindestens ein Filmscharnier mit einem Deckelteil verbunden ist, welches im vormontiertem Zustand über mindestens ein Rastelement mit mindestens einer Gegenrast des U-förmig ausgebildeten Lagerbereichs verbunden ist.

Als allgemeiner Stand der Technik ist es bereits bekannt, derartige Halteelemente, beispielsweise zur Verlegung von Kraft- und Bremsleitungen auf dem Kraftfahrzeugsektor, einzusetzen. Diese Leitungen, die die rohrförmigen Gegenstände bilden, müssen funktionssicher und verschiebefrei an dem Träger montiert sein. Zum Stand der Technik ist darüber hinaus ein Halteelement bekannt (DE 37 08 864 C2), bei welchem in einer Ausführungsform das Deckelteil über ein Filmscharnier mit dem Lagerbereich verbunden ist, wobei in montiertem Zustand ein Rastelement des Deckelteils mit mindestens einer Gegenrast des Lagerbereichs verbunden ist.

Außerdem ist ein Halteelement bekannt, bei welchem ein über ein Filmscharnier mit dem Lagerbereich verbundenes Deckelteil über Rast und Gegenrast an dem Lagerbereich befestigbar ist (FR-A-2 572 488)

Weiterer Stand der Technik bezieht sich auf ein anders gestaltetes Halteelement (DE-GM 82 13 664.5), bei welchem wiederum das Deckelteil über eine Rast mit einer Gegenrast des Lagerbereichs zu verbinden ist.

Darüber hinaus ist eine Konstruktion bekannt, bei welcher das Deckelteil zwei Rastelemente aufweist, welche in die entsprechenden Gegenrasten des Lagerteils in montiertem Zustand eingelagert sind (US-PS 347 998).

Gegenüber diesen bekannten Konstruktionen besteht die Aufgabe der vorliegenden Erfindung darin, ein Halteelement der eingangs genannten Art zu schaffen, welches zwei Raststufen ermöglicht, nämlich zunächst eine Vormontage nach Einlegen des zu befestigenden rohrförmigen Gegenstands und anschließend eine Endmontage, in welcher der betreffende Gegenstand einwandfrei, funktionssicher und verschiebefest mit dem Halteelement verbunden ist.

Diese Aufgabe wird erfindungsgemäß mit den Merkmalen im kennzeichnenden Teil des Anspruchs 1 gelöst. Hierdurch ergibt sich der Vorteil einer zweistufigen Montage, wobei zunächst durch eine Vormontage nach Einlegen des zu befestigenden rohrförmigen Gegenstands die gesamte Einheit der Endmontage zugeführt werden kann.

In weiterer Ausgestaltung der Erfindung sind die beiden Endrastbereiche des Deckelteils nach Brechen des Filmscharniers in die Gegenrastelemente des Lagerbereichs eingelagert. Damit ist das Deckelteil lediglich über die Gegenrastelemente und die Endrastbereiche mit dem Lagerbereich verbunden, so dass das Filmscharnier keine Funktion mehr hat.

Nach einem weiteren Merkmal der Erfindung kann sich zwischen der Halbschale und einem Grundkörper des Deckelteils eine halbschalenförmige Ausnehmung befinden, wodurch der zu halternde rohrförmige Gegenstand federnd gehaltert wird. Durch die Ausnehmung ist außerdem in einem gewissen Bereich eine Anpassung an den jeweils vorliegenden Durchmesser des rohrförmigen Gegenstands möglich.

Der Grundkörper kann an beiden Seitenflächen die Endrastbereiche aufweisen, wobei diese Endrastbereiche in Form von hinterschnittenen Aussparungen ausgebildet sein können, welche in die in mindestens einer Sperrleiste versehenen Gegenrastelemente einlagerbar sind.

Im endmontiertem Zustand des Deckelteils befindet sich das der Vormontage zugeordnete Rastelement außerhalb eines Eingriffsbereichs.

In weiterer Ausgestaltung der Erfindung kann auch der Lagerbereich zwischen den beiden Schenkeln eine Halbschale besitzen. Hierbei besteht die Möglichkeit, dass die Halbschale des Deckelteils und/oder die Halbschale des Lagerbereichs mindestens eine Spitze zum Einlagern an den Außenumfang des rohrförmigen Gegenstands im endmontierem Zustand des Deckelteils aufweist. Diese Spitzen wirken wie eine Sicherung gegen Verschiebung in Längsachse sowie gegen Rotation (um den rohrförmigen Gegenstand) des mit dem Halteelement montierten rohrförmigen Gegenstands.

Die Konstruktion ist erfindungsgemäß so beschaffen, dass im endmontiertem Zustand des Deckelteils deren Halbschale, die Ausnehmung und zumindest ein Teil des Grundkörpers zwischen den beiden Schenkeln des Lagerbereichs eingelagert sind.

Um gegenüber einer Trägeröffnung einen dichten Abschluss zu gewährleisten, besteht in weiterer Ausgestaltung der Erfindung die Möglichkeit, dass sich zwischen der Unterseite des Lagerbereichs und einem mit dem Träger verwendbaren Element des Haltebereichs eine umlaufende, elastische Dichtlippe befindet. Darüber hinaus kann der Haltebereich die verschiedensten Formen aufweisen, beispielsweise als Grobgewindebolzen ausgebildet sein, als mit federnden Abschnitten versehenes Eingriffsteil oder als mit profiliertem Innenbereich ausgebildete Hülse.

Die Erfindung wird nachfolgend anhand eines in der Zeichnung dargestellten Ausführungsbeispiels näher beschrieben. In der Zeichnung zeigen:
- Fig. 1: eine Seitenansicht des Halteelements in geöffnetem Zustand;
- Fig. 2: eine Vorderansicht des Halteelements nach Anspruch 1;
- Fig. 3: eine Draufsicht auf das Halteelement nach Anspruch 1 und 2;
- Fig. 4: das Halteelement gemäß Fig. 1 in vormontiertem Zustand in Seitenansicht; und
- Fig. 5: das Halteelement nach Fig. 1 im Zustand der Endmontage.

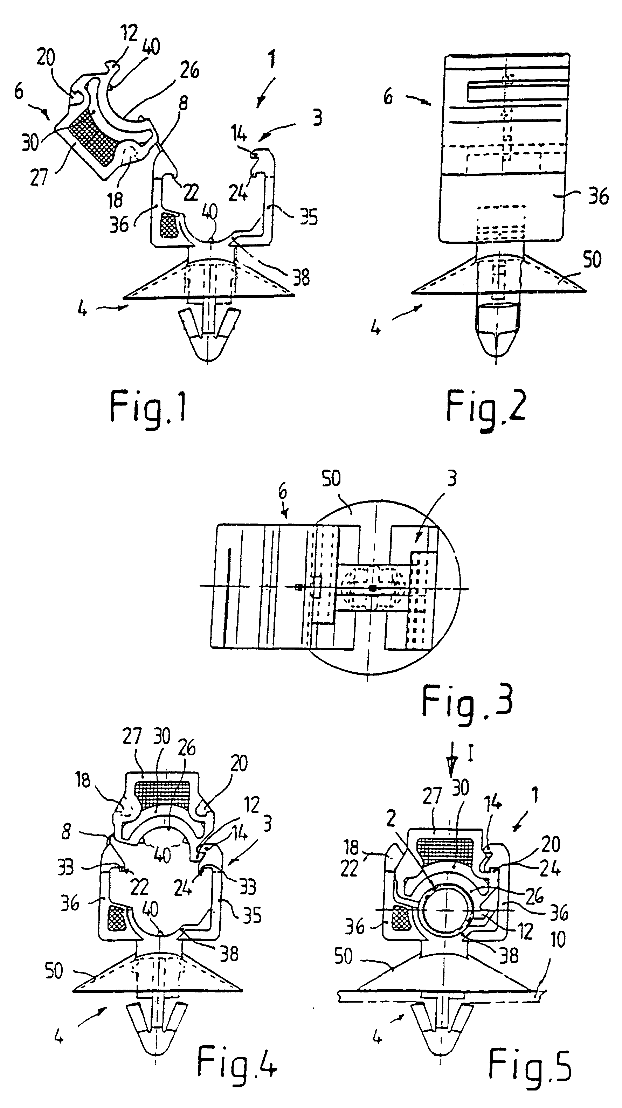

In den Zeichnungen ist ein Halteelement 1 aus Kunststoff dargestellt, welches insbesondere zur Befestigung mindestens eines in Fig. 5 gezeigten rohrförmigen Gegenstands 2 an einem Träger 10 dient.

Wie ersichtlich, weist dieses Halteelement 1 einen Lagerbereich 3 für den rohrförmigen Gegenstand und einen Haltebereich 4 zur Anbringung an dem Träger 10 auf. Der Haltebereich 4 kann in verschiedenster Weise gestaltet sein, beispielsweise mit einem Fuß mit zwei einander gegenüberliegenden elastischen Flügeln, oberhalb welchem eine Dichtlippe 50 gemäß dem vorliegenden Ausführungsbeispiel angeordnet ist.

Gemäß anderen, nicht näher dargestellten Bauformen kann an einem Träger ein T-Bolzen angeordnet sein, wobei der Haltebereich 4 eine entsprechende Öffnung aufweist, um mit diesem Bolzen verbunden zu werden. Der Haltebereich kann alternativ auch einzelne konische Elemente aufweisen, welche sich in eine nicht näher dargestellten Öffnung des Trägers 10 einlagern.

Aus den Fig. 1 bis 5 geht hervor, dass der Lagerbereich 3 über mindestens ein Filmscharnier 8 mit einem Deckelteil 6 verbunden ist. Der Lagerbereich 3 weist hierbei ein Rastelement 12 auf, welches mit einer Gegenrast 14 des U-förmig ausgebildeten Lagerbereichs 3 verbunden ist. Diese erste Verbindung stellt eine Vormontage dar und ist in Fig. 4 näher dargestellt.

Aus Fig. 1, 4 und 5 geht hervor, dass diesem Rastelement 12 in Montagerichtung I zwei einander gegenüberliegende Endrastbereiche 18 und 20 im Deckelteil nachgeordnet sind, welche nach Fig. 5 in montiertem Zustand bei geschlossenem Deckelteil 6 in zwei Gegenrastelemente 22 und 24 eingelagert sind. Insbesondere aus Fig. 5 ist hierbei ersichtlich, dass die beiden Endrastbereiche 18 und 20 des Deckelteils 6 nach Brechen des Filmscharniers 8 in die Gegenrastelemente 22 und 24 des Lagerbereichs 3 eingelagert sind.

Das Deckelteil 6 kann eine Halbschale 26 aufweisen, welches an einem Endbereich das Rastelement 12 und am anderen Endbereich das Filmscharnier 8 besitzt. Insbesondere aus Fig. 4 und 5 geht hervor, dass sich zwischen der Halbschale 26 und einem Grundkörper 27 des Deckelteils 6 eine halbschalenförmige Ausnehmung 30 befindet. Hierdurch ergibt sich in montiertem Zustand eine gewisse Federwirkung auf den zu halternden rohrförmigen Gegenstand 2.

Der Grundkörper 27 ist so gestaltet, dass an beiden Seitenflächen die Endrastbereiche 18 und 20 vorhanden sind, welche beispielsweise in Form von hinterschnittenen Aussparungen vorliegen. Diese hinterschnittenen Aussparungen sind in die mit mindestens einer Sperrleiste 33 versehenen Gegenrastelemente 22 und 24 nach Fig. 4 und 5 einlagerbar.

Der Lagerbereich 3 weist zwei Schenkel 35 und 36 nach Fig. 4 auf, wobei der eine Schenkel 35 im Endbereich hintereinander angeordnet die Gegenrast 14 und das eine Gegenrastelement 24 aufweist. Der andere Schenkel 36 besitzt im Endbereich das andere Gegenrastelement 22 und oberhalb davon gemäß Fig. 1 und 4 das Filmscharnier 8. Zwischen den beiden Schenkeln 35 und 36 weist der Lagerbereich 3 eine Halbschale 38 auf.

Aus Fig. 4 geht hervor, dass die Halbschale 26 des Deckelteils 6 und die Halbschale des Lagerbereichs 3 mit mindestens einer Spitze 40 versehen sind. Diese über den Umfang der jeweiligen Halbschale verteilten Spitzen dienen nach Fig. 5 zum Einlagern in den Außenumfang des zu halternden rohrförmigen Gegenstands 2; in montiertem Zustand beaufschlagen diese Spitzen damit den Gegenstand 2 und haltern diesen in Längsrichtung und bezüglich Rotation verschiebefest und funktionssicher an dem Halteelement 1. Diese Spitzen 40 können in einer Reihe liegen oder auf der jeweiligen Halbschale versetzt angeordnet sein.

Fig. 4 stellt die erste Rastposition dar, beispielsweise in Form einer manuellen Einrastung. Hier lagert sich nach Einbringen des zu halternden rohrförmigen Gegenstands das Rastelement 12 in die Gegenrast 14 des Lagerbereichs 3. Beide Elemente 12 und 14 können nach Fig. 2 und 3 über die volle Breite des Deckelteils 6 und des Lagerbereichs 3 laufen und somit eine sichere Befestigung in vormontiertem Zustand gewährleisten.

Nunmehr besteht die Möglichkeit, über eine nicht näher dargestellte mechanische Einrastvorrichtung in Montagerichtung I nach Fig. 5 Druck auf das Deckelteil 6 auszuüben, wodurch sich das Rastelement 12 von der Gegenrast 14 löst und sich stattdessen die Endrastbereiche 18 und 20 des Deckelteils 6 mit den Gegenrastelementen 22 und 24 des Lagerbereichs 2 verriegeln. In diesem in Fig. 5 dargestellten montierten Zustand befindet sich damit das Rastelement 12 außerhalb eines Eingriffsbereichs. Nunmehr ist die Endmontage beendet und der zu halternde rohrförmige Gegenstand, beispielsweise ein Kautschukrohr, ein Plastikrohr, ein Kabel oder ein anderes Element ist verschiebesicher und funktionsrichtig an dem Halteelement 1 befestigt. Durch die Halbschalen 26 und 38 des Deckelteils 6 und des Lagerbereichs 3 wirkt eine Klemmspannung auf den zu halternden rohrförmigen Gegenstand 2, so dass dieser einwandfrei befestigt ist. Nach Reißen des Filmscharniers 8 greift das Deckelteil 6 mit seinen Endrastbereichen 18 und 20 so in die Gegenrastelemente 22 und 24 des Lagerbereichs 3, dass keine Verschiebung in Längsrichtung mehr möglich ist. Hierzu können beispielsweise die Gegenrastelemente 22 und 24 bezüglich ihrer Breite kleiner sein als die taschenartig ausgebildeten Endrastbereiche 18 und 20. Damit wird eine unerwünschte seitliche Verschiebung des Deckelteils 6 gegenüber dem Lagerbereich 3 einwandfrei vermieden.

Ein Öffnen des Deckelteils ist nur dann möglich, wenn mit Hilfe eines nicht näher dargestellten Werkzeuges die Verriegelung zwischen den Endrastbereichen 18 und 20 und den Gegenrastelement 22 und 24 aufgehoben wird.

Insgesamt ergibt sich ein Halteelement 1 aus Kunststoff, welches bei einfachem Aufbau und der Möglichkeit einer Vormontage im Endzustand eine einwandfreie Halterung eines rohrförmigen Gegenstands gewährleistet.

## Patentansprüche

1. Halteelement aus Kunststoff, insbesondere zur Befestigung mindestens eines rohrförmigen Gegenstands (2) an einem Träger (10), mit einem Lagerbereich (3) für den rohrförmigen Gegenstand und einem Haltebereich (4) zur Anbringung an einem Träger (10), wobei der Lagerbereich (3) über mindestens ein Filmscharnier (8) mit einem Deckelteil (6) verbunden ist, welches im vormontierten Zustand über mindestens ein Rastelement (12) mit mindestens einer Gegenrast (14) des U-förmig ausgebildeten Lagerbereichs (3) verbunden ist,
**dadurch gekennzeichnet,**
**dass** dem Rastelement (12) in Montagerichtung (I) zwei einander gegenüberliegende Endrastbereiche (18, 20) im Deckelteil (6) nachgeordnet sind, welche im endmontierten Zustand bei geschlossenem Deckelteil (6) in zwei Gegenrastelemente (22, 24) eingelagert sind,
**dass** eine Halbschale (26) des Deckelteils (6) an einem Endbereich (4) das Rastelement (12) und am anderen Endbereich das Filmscharnier (8) aufweist und
**dass** der eine Schenkel (35) des U-förmig ausgebildeten Lagerbereichs (3) im Endbereich hintereinander angeordnet die Gegenrast (14) und das eine Gegenrastelement (24) und der andere Schenkel im Endbereich das andere Gegenrastelement (22) und oberhalb davon das Filmscharnier (8) aufweisen.

2. Haltelement nach Anspruch 1, **dadurch gekennzeichnet, dass** die beiden Endrastbereiche (18, 20) des Deckelteils (6) nach Brechen des Filmscharniers (8) im endmontiertem Zustand in die Gegenrastelemente (22, 24) des Lagerbereichs (3) eingelagert sind.

3. Halteelement nach Anspruch 1, **dadurch gekennzeichnet, dass** sich zwischen der Halbschale (26) und einem Grundkörper (27) des Deckelteils (6) eine halbschalenförmige Ausnehmung (30) befindet.

4. Halteelement nach Anspruch 3, **dadurch gekennzeichnet, dass** der Grundkörper (27) an beiden Seitenflächen die Endrastbereiche (18, 20) aufweist.

5. Halteelement nach Anspruch 1, **dadurch gekennzeichnet, dass** die Endrastbereiche (18, 20) in Form von hinterschnittenen Aussparungen ausgebildet sind, welche in die mit mindestens einer Sperrleiste versehenen Gegenrastelemente (22, 24) einlagerbar sind.

6. Halteelement nach Anspruch 1, **dadurch gekennzeichnet, dass** sich im Endmontierten Zustand des Deckelteils (6) das Rastelement (12) außerhalb eines Eingriffsbereichs befindet.

7. Halteelement nach einem der vorhergehenden Ansprüche, **dadurch gekennzeichnet, dass** der Lagerbereich (3) zwischen den beiden Schenkeln (35, 36) eine Halbschale (38) besitzt.

8. Halteelement nach Anspruch 1 und 7, **dadurch gekennzeichnet, dass** die Halbschale (26) des Deckelteils (6) und/oder die Halbschale (38) des Lagerbereichs (3) mindestens eine Spitze (40) zum Einlagern in den Außenumfang des rohrförmigen Gegenstands (2) im endmontierten Zustand des Deckelteils (6) aufweist.

9. Halteelement nach einem oder mehreren der vorhergehenden Ansprüche, **dadurch gekennzeichnet, dass** im endmontierten Zustand des Deckelteils (6) dessen Halbschale (26), die Ausnehmung (30) und zumindest ein Teil des Grundkörpers (27) zwischen den beiden Schenkeln (35, 36) des Lagerbereichs (3) eingelagert sind.

10. Halteelement nach einem oder mehreren der vorhergehenden Ansprüche, **dadurch gekennzeichnet, dass** sich zwischen der Unterseite des Lagerbereichs (3) und einem mit dem Träger (10) verbindbaren Element des Haltebereichs (4) eine umlaufende, elastische Dichtlippe (50) befindet.

11. Halteelement nach Anspruch 1, **dadurch gekennzeichnet, dass** der Haltebereich entweder als Profilbolzen, oder Eingriffselement mit gegenüberliegenden federnden Abschnitten bzw. als mit Innenprofilen versehene Eingriffshülse ausgebildet ist.

## Claims

1. Plastic retaining element, in particular for fastening at least one tubular object (2) to a support (10), having a bearing region (3) for the tubular object and a retaining region (4) for the attachment to a support (10), the bearing region (3) being connected via at least one film hinge (8) to a cover part (6) which, in the pre-assembled state, is connected via at least one latching element (12) to at least one counterlatch (14) of the bearing region (3), which is of U-shaped design, **characterized in that**
two mutually opposite end latching regions (18, 20) are arranged downstream of the latching element (12) in the installation direction (I) in the cover part (6), the said end latching regions being embedded in two counterlatching elements (22, 24) in the final assembled state with the cover part (6) closed,
**in that** a half-shell (26) of the cover part (6) has the latching element (12) on one end region (4) and the film hinge (8) on the other end region, and
**in that** the one limb (35) of the bearing region (3) of U-shaped design has, in the end region arranged one behind the other, the counterlatch (14) and the one counterlatching element (24), and the other limb has, in the end region, the other counterlatching element (22) and, above it, the film hinge (8).

2. Retaining element according to Claim 1, **characterized in that** the two end latching regions (18, 20) of the cover part (6) are embedded in the counterlatching elements (22, 24) of the bearing region (3) in the final assembled state after the film hinge (8) is broken.

3. Retaining element according to Claim 1, **characterized in that** a recess (30) in the shape of a half-shell is situated between the half-shell (26) and a base body (27) of the cover part (6).

4. Retaining element according to Claim 3, **characterized in that** the base body (27) has the end latching regions (18, 20) on both side surfaces.

5. Retaining element according to Claim 1, **characterized in that** the end latching regions (18, 20) are designed in the form of undercut cutouts which can be embedded into the counterlatching elements (22, 24), which are provided with at least one locking strip.

6. Retaining element according to Claim 1, **characterized in that** in the final assembled state of the cover part (6) the latching element (12) is situated outside an engagement region.

7. Retaining element according to one of the preceding claims, **characterized in that** the bearing region (3) between the two limbs (35, 36) has a half-shell (38).

8. Retaining element according to Claims 1 and 7, **characterized in that** the half-shell (26) of the cover part (6) and/or the half-shell (38) of the bearing region (3) has/have at least one point (14) for embedding into the outer circumference of the tubular object (2) in the final assembled state of the cover part (6).

9. Retaining element according to one or more of the preceding claims, **characterized in that** in the final assembled state of the cover part (6) its half-shell (26), the recess (30) and at least part of the base body (27) are embedded between the two limbs (35, 36) of the bearing region (3).

10. Retaining element according to one or more of the preceding claims, **characterized in that** a peripheral elastic sealing lip (50) is situated between the lower side of the bearing region (3) and an element of the retaining region (4), which element can be connected to the support (10).

11. Retaining element according to Claim 1, **characterized in that** the retaining region is designed either as a profiled bolt, or engagement element having opposite, resilient sections, or as an engagement sleeve provided with internal profiles.

## Revendications

1. Élément de maintien en matière plastique, en particulier pour fixer au moins un objet tubulaire (2) sur un support (10), comportant une zone de montage (3) pour l'objet tubulaire et une zone de maintien (4) pour l'agencement sur un support (10), la zone de montage (3) étant reliée à une partie de couvercle (6) via au moins une charnière en film (8), partie qui est reliée, dans l'état pré-assemblé, via au moins un élément d'enclenchement (12) à au moins un cran complémentaire (14) de la zone de montage (3) réalisée en forme de U,
**caractérisé en ce que**
il est prévu, en aval de l'élément d'enclenchement (12) en direction de montage (I), deux zones d'enclenchement finales (18, 20) opposées l'une à l'autre dans la partie de couvercle (6), qui sont montées dans deux crans complémentaires (22, 24) dans l'état monté fini lorsque la partie de couvercle (6) est fermée,
**en ce qu'**une demi-coque (26) de la partie de couvercle (6) comprend l'élément d'enclenchement (12) sur une zone d'extrémité (4) et la charnière en film (8) sur l'autre zone d'extrémité, et
**en ce que** l'un des bras (35) de la zone de montage (3) réalisée en forme de U comprend dans la zone d'extrémité le cran complémentaire (14) et l'un des éléments d'enclenchement complémentaires (24) agencés l'un derrière l'autre, et l'autre bras comprend dans la zone d'extrémité l'autre élément d'enclenchement complémentaire (22) et au-dessus de celui-ci la charnière en film (8).

2. Élément de maintien selon la revendication 1, **caractérisé en ce que** les deux zones d'enclenchement finales (18, 20) de la partie de couvercle (6) sont montées, après rupture de la charnière en film (8), dans l'état monté fini, dans les éléments d'enclenchement complémentaires (22, 24) de la zone de montage (3).

3. Élément de maintien selon la revendication 1, **caractérisé en ce qu'**un évidement (30) en forme de demi-coque se trouve entre la demi-coque (26) et un corps de base (27) de la partie de couvercle (6).

4. Élément de maintien selon la revendication 3, **caractérisé en ce que** le corps de base (27) comprend sur les deux surfaces latérales les zones d'enclenchement finales (18, 20).

5. Élément de maintien selon la revendication 1, **caractérisé en ce que** les zones d'enclenchement finales (18, 20) sont réalisées sous forme d'échancrures en contre-dépouille, dans lesquelles on peut loger les éléments d'enclenchement complémentaires (22, 24) pourvus d'au moins une barrette de blocage.

6. Élément de maintien selon la revendication 1, **caractérisé en ce que** dans l'état monté fini de la partie de couvercle (6), l'élément d'enclenchement (12) se trouve à l'extérieur d'une zone d'engagement.

7. Élément de maintien selon l'une des revendications précédentes, **caractérisé en ce que** la zone de montage (3) possède une demi-coque (38) entre les deux bras (35, 36).

8. Élément de maintien selon les revendications 1 et 7, **caractérisé en ce que** la demi-coque (26) de la partie de couvercle (6) et/ou la demi-coque (38) de la zone de montage (3) comprend au moins une pointe (40) pour le montage dans la périphérie extérieure de l'objet tubulaire (2) dans l'état monté fini de la partie de couvercle (6).

9. Élément de maintien selon l'une ou plusieurs des revendications précédentes, **caractérisé en ce que** dans l'état monté fini de la partie de couvercle (6), sa demi-coque (26), l'évidement (30) et une partie au moins du corps de base (27) sont montés entre les deux bras (35, 36) de la zone de montage (3).

10. Élément de maintien selon l'une ou plusieurs des revendications précédentes, **caractérisé en ce qu'**une lèvre d'étanchéité périphérique élastique (50) se trouve entre la face inférieure de la zone de montage (3) et un élément de la zone de maintien (4) qui peut être relié au support (10).

11. Élément de maintien selon la revendication 1, **caractérisé en ce que** la zone de maintien est réalisée soit sous forme de goujon profilé, soit sous forme d'élément d'engagement avec des tronçons élastiques opposés soit encore sous forme de douille d'engagement pourvue de profilés intérieurs.
